Europäisches Patentamt

European Patent Office

Office européen des brevets

(11) Veröffentlichungsnummer: **0 394 520**
**A1**

## EUROPÄISCHE PATENTANMELDUNG

(21) Anmeldenummer: **89107581.4**

(22) Anmeldetag: **26.04.89**

(51) Int. Cl.5: **B26D 3/16,** //**B65H35/00,**
**B23D47/04**

(43) Veröffentlichungstag der Anmeldung:
**31.10.90 Patentblatt 90/44**

(84) Benannte Vertragsstaaten:
**AT BE CH DE ES FR GB IT LI LU NL SE**

(71) Anmelder: **RICHARD CHR. NICOLAUS GMBH &
CO. KG**
**Büttgenbachstrasse 5**
**D-4000 Düsseldorf(DE)**

(72) Erfinder: **Nicolaus, Richard**
**Schlossstrasse 36**
**D-4000 Düsseldorf 1(DE)**

(74) Vertreter: **Paul, Dieter-Alfred, Dipl.-Ing.**
**Fichtestrasse 18**
**D-4040 Neuss 1(DE)**

(54) **Verfahren zum Abtrennen von Rollenmaterialabschnitten von einem Rollenmaterial sowie
Vorrichtung zur Durchführung dieses Verfahrens.**

(57) Um qualitativ hochwertige Rollenmaterialabschnitte schnell herstellen zu können, wird das Rollenmaterial (42) für jeden Trennvorgang beidseits der vorgesehenen Trennstelle am Umfang eingespannt und über die Einspannungen (13, 14) zumindest während des Trennvorgangs angetrieben. Die Einspannungen (13, 14) werden zwischen zwei Trennvorgängen gelöst, bis das Trennwerkzeug (5) gegenüber der nächsten Trennstelle steht.

Fig. 1

EP 0 394 520 A1

## Verfahren zum Abtrennen von Rollenmaterialabschnitten von einem Rollenmaterial sowie Vorrichtung zur Durchführung dieses Verfahrens

Die Erfindung betrifft ein Verfahren zum Abtrennen von Rollenmaterialabschnitten von einem Rollenmaterial, insbesondere aus auf einer Kernhülse aufgewickeltem Papier, bei dem das Rollenmaterial durch umfangseitigen Antrieb von einem Ende her in Drehung versetzt wird und nacheinander die Rollenmaterialabschnitte an Trennstellen durch radiales Einfahren eines Trennwerkzeuges abgetrennt werden. Die Erfindung betrifft desweiteren eine Vorrichtung zur Durchführung dieses Verfahrens mit einer Spanneinrichtung zum umfangseitigen Einspannen des Rollenamterials, einer Abstützeinrichtung zur zusätzlichen Abstützung des Rollenmaterials, mit einem Drehantrieb, der mit der Spanneinrichtung zwecks Übertragung der Drehbewegung auf das Rollenmaterial in Drehverbindung steht, und mit einer ein Trennwerkzeug aufweisenden Trenneinrichtung.

Ein derartiges Verfahren bzw. eine derartige Vorrichtung sind aus der DE-OS 22 22 548 und der DE-OS 24 25 123 bekannt. Diese Vorrichtungen weisen einen Ständer mit einer darin gelagerten, angetriebenen Drehwelle auf. Auf diese Drehwelle wird das Rollenmaterial zum Abtrennen von Rollenmaterialabschnitten aufgeschoben. An einer Seite der Drehwelle befindet sich ein mit der Drehwelle verbundener Spannteller, der mit einer Rehe von Spannklauen besetzt ist, welche am Umfang des Rollenmaterials zur Anlage gebracht werden können. Durch Drehen des Spanntellers und der Drehwelle wird das Rollenmaterial für die Trennvorgänge in Drehung versetzt.

Zum Durchtrennen des Rollenmaterials ist eine Trenneinrichtung vorgesehen, die parallel zur Achse der Drehwelle verschiebbar gelagert ist. Sie weist ein Trennwerkzeug in Form eines Bandsägeblattes oder einer Kreissäge auf, welches durch Verschwenken radial in das Rollenmaterial eingefahren werden kann.

Mit dieser Vorrichtung kann nur Rollenmaterial durchtrennt werden, dessen Kernhülse einen so großen Querschnitt freiläßt, daß das Rollenmaterial auf die Drehwelle aufgezogen werden kann. Für das Durchtrennen von Rollenmaterial mit geringerem Durchmesser der Kernhülse weist die Vorrichtung nach der DE-OS 24 25 123 eine besondere Zusatzeinrichtung auf. Diese Zusatzeinrichtung hat einen an der Trenneintichtung gelagerten Schwenkarm mit einer aus zwei gabelartigen Teilen bestehenden Lagerhülse, wobei der Schwenkarm in Richtung auf das Trennwerkzeug geschwenkt werden kann. In Arbeitsposition kann das als Kreissäge ausgebildete Trennwerkzeug zwischen die gabelartigen Teile der Lagerhülse fahren und ein in die Lagerhülse eingelegtes Rollenmaterial durchtrennen. Zusätzlich wird das Rollenmaterial in einem exzentrischen Durchgangsloch in der Aufspannscheibe abgestützt, wozu diese festgesetzt und deren Antrieb abgeschaltet wird.

Diese Zusatzeinrichtung ist praktisch nicht funktionsfähig, da sich das Rollenmaterial beim Aufsetzen der Kreissäge mangels Antrieb und Einspannung frei zu drehen beginnt und damit ein Eindringen des Trennwerkzeuges stark behindert. Da zudem eine Führung des Rollenmaterials nicht vorgesehen ist, ist ein exakter und sauberer Schnitt, wie er heute unerläßlich ist, nicht erzielbar.

Aus diesem Grund ist die technische Entwicklung beim Durchtrennen von Rollenmaterial einen anderen Weg gegangen. Hierzu wird von einer Großrolle mit Arbeitsbreiten von 1000 bis 1500 mm eine Papierbahn abgezogen und die Papierbahn dann in einer Längsschneidevorrichtung in Papierbahnstreifen der gewünschten Breite aufgeteilt. Diese Papierbahnstreifen werden dann in einer Aufwickelstation auf eine mit Kurzhülsen entsprechender Breite bestückte Achse aufgewickelt.

Bei diesem Verfahren müssen jedoch einige Nachteile in Kauf genommen werden. So fällt bei einer Veränderung der Breite der Rollenabschnitte eine hohe Stillstandszeit wegen Verstellung der Längsschneidevorrichtung an. Es muß ein großes Sortiment an Kurzhülsen in verschiedenen Breiten und Durchmessern vorgehalten werden, die dann auf die Aufwickelstation aufgespannt werden. Diese Kurzhülsen sind teuer und haben zudem eine beträchtliche Längenungenauigkeit. Das Einrichten der Aufwickelstation ist zeitaufwendig, da die einzelnen Papierstreifen vor dem Wickelbeginn eingeschlagen werden müssen. Nach dem Wickeln besteht eine zusätzliche Schwierigkeit darin, die einzelnen Rollenmaterialabschnitte voneinander zu trennen, da die Papierbahnstreifen die Neigung haben, beim Aufwickeln ineinanderzulaufen. Entsprechend stehen die Papierbahnstreifen an den Stirnseiten der Rollenmaterialabschnitte unterschiedlich weit vor, was zu einer hohen Ausschußquote führt, da diese Stirnseiten möglichst glatt sein müssen.

Der Erfindung liegt die Aufgabe zugrunde, ein Verfahren sowie eine dazu geeignete Vorrichtung bereitzustellen, mit dem bzw. mit der qualitativ hochwertige Rollenmaterialabschnitte schnell hergestellt werden können und das bzw. die vielseitig einsetzbar ist, insbesondere für Rollenmaterial mit einer Kernhülse geringen Durchmessers, wie sie beispielsweise für Kassenrollen bestimmt sind.

Diese Aufgabe wird - was das Verfahren angeht -erfindungsgemäß dadurch gelöst, daß das Rollenmaterial für jeden Trennvorgang beidseits der vorgesehenen Trennstelle am Umfang eingespannt und über die Einspannungen zumindest während des Trennvorgangs angetrieben wird und daß die Einspannungen zwischen zwei Trennvorgängen gelöst werden, bis das Trennwerkzeug gegenüber der nächsten Trennstelle steht.

Erfindungsgemäß wird also von dem Prinzip des Aufspannens auf eine Drehwelle abgewichen, um insoweit keinen Beschränkungen hinsichtlich des Innendurchmessers des Rollenmaterials bzw. der Kernhülse zu unterliegen. Für den Trennvogang wird das Rollenmaterial auf beiden Seiten der Trennstelle angetrieben, indem das Rollenmaterial dort zweifach eingespannt und über die Einspannung in Drehung versetzt wird. Dies ergibt einen äußerst genauen sowie sauberen und sehr glatten Schnitt an den Stirnseiten der Rollenmaterialabschnitte. Die Einspannungen lassen sich nach dem Trennvorgang lösen, so daß der abgetrennte Rollenmterialabschnitt entnommen und eine neue Positionierung in Bezug auf die nächste Trennstelle vorgenommen werden kann.

Zweckmäßigerweise erfolgt das Einspannen und Trennen jeweils am selben Ort, so daß das Rollenmaterial zwischen zwei Trennvorgängen relativ dazu verschoben wird. Dies hat den Vorteil, daß nur die Masse des Rollenmaterials bewegt werden muß und die maschinelle Einrichtung zur Durchführung des Einspannens, Antreibens und Trennens unbeweglich bleiben kann.

Von besonderem Vorteil ist, wenn das Rollenmaterial an dem den Einspannungen entfernten Ende ebenfalls angetrieben wird. Dies eröffnet die Möglichkeit, das Rollenmaterial auch zwischen zwei Trennvorgängen anzutreiben und weiterdrehen zu lassen, was die Taktzeiten für das Abtrennen eines Rollenmaterialabschnittes weiter herabsetzt.

Nach einem weiteren der Merkmal der Erfindung ist vorgesehen, daß die Rollenmaterialbahn nur über die der jeweiligen Trennstelle benachbarten Einspannungen und an dem davon entfernten Ende abgestützt ist, da dies bei den derzeitigen Längen des Rollenmaterials ausreichend ist.

Die erfindungsgemäße Vorrichtung weist folgende, vom Stand der Technik abweichende Merkmale auf:

(a) Spanneinrichtung und Trenneinrichtung bilden eine Trenneinheit;

(b) die Spanneinrichtung weist beidseits des Trennwerkzeuges angeordnete Spannelemente zum umfangsseitigen Einspannen des Rollenmaterials beidseits des Trennwerkzeuges auf;

(c) die Spannelemente sind auf beiden Seiten des Trennwerkzeuges mit dem Drehantrieb verbunden.

In diesen Merkmalen kommt das Grundprinzip der Erfindung zum Ausdruck, das Rollenmaterial für den Trennvorgang auf beiden Seiten des Trennwerkzeuges umfangsseitig einzuspannen und hierüber - ebenfalls beidseitig des Trennwerkzeuges - anzutreiben. Diese Ausgestaltung sichert einen präzisen Schnitt, wobei auf den freien Durchmesser im Kern des Rollenmaterials keine Rücksicht genommen werden muß. Die Vorrichtung eignet sich insbesondere für die Herstellung von Papierrollen für Kassen und Rechenmaschinen.

Besonders vorteilhaft ist, wenn die Abstützeinrichtung axial unbeweglich mit dem Rollenmaterial verbindbar ist und die Trenneinheit und/oder die Abstützeinrichtung zur Veränderung des Axialabstandes zwischen beiden verschiebbar gelagert ist, wobei es zweckmäßig ist, daß die Trenneinheit ortsfest angeordnet und die Abstützeinrichtung axial beweglich ist. Auf diese Weise kann die jeweils nachfolgende Trennstelle außerordentlich exakt angefahren werden, indem entweder die Trenneinheit oder besser noch die Abstützeinrichtung zusammen mit dem Rollenmaterial axial verfahren wird. Dieses maschinelle Positionieren von Trennwerkzeug und Trennstelle erlaubt zudem niedrige Taktzeiten.

Nach der Erfindung ist ferner vorgeschlagen, daß die Abstützeinrichtung eine weitere Spanneinrichtung aufweist, welche mit dem Drehantrieb zwecks Antrieb des Rollenmaterials in Drehverbindung steht. Diese vorzugweise das der Trenneinrichtung entfernt liegende Ende des Rollenmaterials aufnehmende, weitere Spanneinrichtung ermöglicht aufgrund ihrer Drehverbindung mit dem Drehantrieb, das Rollenmaterial auch während der Positionierung des Trennwerkzeuges in Bezug auf die nächste Trennstelle weiterdrehen zu lassen und auf diese Weise die Zeit für das Abbremsen und wieder Beschleunigen des Rollenmaterials einzusparen, also die Taktzeiten zu verkürzen. Hierzu sollte sich zweckmäßigerweise zwischen Trenneinheit und Stützeinrichtung eine Welle erstrecken, auf der ein in der Abstützeinrichtung gelagertes, auf der Welle drehfest, aber verschiebbar angeordnetes Antriebsrad sitzt, welches in Drehverbindung mit der Spanneinrichtung steht. Auf diese Weise bleibt der Antrieb trotz axialer Verschiebung der Abstützeinrichtung erhalten. Die Welle kann auch dazu benutzt werden, die Spannelemente der Trenneinrichtung über auf ihr sitzende Antriebsräder anzutreiben, wobei die jeweiligen Drehverbindungen vorzugsweise als Riemenantrieb ausgebildet sind, um Erschütterungen und Schwingungen zu dämpfen.

Die Spanneinrichtung der Abstützeinrichtung weist vorteilhafterweise einen zentrischen Spannzapfen mit einem axial komprimierbaren Spannriemen auf, der in die Kernhülse bzw. den inneren freien Querschnitt eingeführt werden kann. Durch das Komprimieren kann der Spannring an der Innenseite des Rollenmaterials zur Anlage gebracht und auf diese Weise eine reibschlüssige Verbindung hergestellt werden.

Die Abstützeinrichtung ist zweckmäßigerweise auf einem Schlitten angeordnet, der über einen Schneckenradantrieb verfahrbar ist. Solche Schneckenradantriebe, insbesondere wenn sie als Kugelgewindeantriebe ausgebildet sind, lassen eine hohe Positioniergenauigkeit mit Werten von ± 0,1 mm zu, so daß die Breite der abzutrennenden Rollenmaterialabschnitte exakt eingeteilt werden kann. Besonders vorteilhaft ist, wenn der Schneckenradantrieb mit einem Geber versehen wird, über den die jeweilige Stellung des Schlittens erfaßt wird. Als Geber kommt beispielsweise ein Inkrementalgeber in Frage. Dabei kann die jeweilige Stellung des Schlittens durch eine Anzeige digital sichtbar gemacht werden. Vorteilhafter ist jedoch, wenn eine programmierbare Steuerung zur Positionierung des Schlittens vorgesehen wird, die mit dem Inkrementalgeber sowie mit einem an den Schneckenradantrieb angeschlossenen Elektromotor gekoppelt ist. Durch Eingabe der Position der jeweiligen Trennstellen kann der Vorgang des Abtrennens der Rollenmaterialabschnitte vollautomatisiert werden. Dies ermöglicht höchste Genauigkeit bei kurzen Taktzeiten und geringem Bedienungsaufwand.

Nach der Erfindung ist desweiteren vorgeschlagen, daß das Trennwerkzeug mit einem Schneckenradgetriebe für die Radialbewegung sowie dieses mit einem elektromotorischen Antrieb versehen ist, dessen Drehzahl in Abhängigkeit von der Eindringtiefe des Trennwerkzeuges steuerbar ist. Dies ermöglicht es, das Trennwerkzeug, beispielsweise eine Kreissäge entsprechend dem jeweils durchzutrennenden Schnittvolumen erst langsam eintauchen zu lassen und die Eintauchgeschwindigkeit nach innen hin zu erhöhen. Auch dies trägt zur Minimierung der Taktzeiten bei.

Die Spannelemente sind vorzugweise als drehbare Spannringe ausgebildet, die an ihren Innenseiten radial beweglich ausfahrbare Spannbacken aufweisen. Diese Spannbacken nehmen das Rollenmaterial auf und zentrieren es. Über sie erfolgt dann die Drehmomentübertragung. Die Betätigung der Spannbacken kann je nach zur Verfügung stehenden Energiequellen elektrisch, hydraulisch, vorzugsweise aber pneumatisch erfolgen. Sie sollten so ausgebildet sein, daß sie bei Freigabe selbsttätig zurückfahren, beispielsweise aufgrund eines Federmechanismusses oder einer Zwangsführung.

In der Zeichnung ist die Erfindung an Hand eines Ausführungsbeispiels näher veranschaulicht. Es zeigen:

Figur (1) eine Schrägansicht des wesentlichen Teils der erfindungsgemäßen Vorrichtung mit Teilschnitten;

Figur (2) einen teilweisen Axialschnitt durch ein Spannelement und

Figur (3) einen Axialschnitt durch die Abstützeinrichtung der Vorrichtung gemäß Figur (1).

Die in Figur (1) dargestellte Vorrichtung (1) bildet den wesentlichen Teil einer Gesamtvorrichtung und ist in dieser Gesamtvorrichtung innerhalb eines Rahmengestells eingebaut.

Die Vorrichtung (1) hat am einen Ende einen Stützrahmen (2), auf dem eine Trenneinheit (3) montiert ist. Zu dieser Trenneinheit gehört ein Sägengehäuse (4), in dem eine Kreissäge (5) angeordnet ist. Die Kreissäge (5) läßt sich innerhalb des Sägengehäuses (4) horizontal verschieben. Sie ist hierzu auf einem horizontal und axial verschieblich gelagerten Kugelgewindegehäuse (6) gelagert, aus dem eine Spindel (7) austritt, die mit einem Servomotor (8) verbunden ist. Durch Ansteuerung des Servomotors (8) wird die Spindel (7) in Drehbewegung versetzt und das Kugelgewindegehäuse (6) horizontal verschoben. Dabei ist das Kugelgewindegehäuse (6) auf einer Konsole (9) verschieblich gelagert, an der auch der Servomotor (8) angeflanscht ist.

Die Drehwelle der Kreissäge (5) ragt aus dem Sägengehäuse (4) heraus und weist dort eine Antriebsrolle (10) auf, die über einen Antriebsriemen (11) mit einer weiteren Antriebsrolle (12) verbunden ist. Beide Antriebsrollen (10, 12) sind auf dem Kugelgewindegehäuse (6) gelagert. Die Antriebsrolle (12) steht - was hier nicht näher dargestellt ist - mit einem Elektromotor in Verbindung.

Die Trenneinheit (3) weist zudem zwei Spannköpfe (13, 14) auf, die beidseits des Sägengehäuses (4) angeflanscht sind und von beiden Seiten in dieses hineinragen. Sie umschließen einen im Querschnitt kreisrunden Durchgangskanal (15), in den die Kreissäge (5) durch einen Schlitz zwischen beiden Spannköpfen (13, 14) einfahrbar ist bzw. in der gezeigten Stellung eingefahren ist. Jeder Spannkopf (13, 14) hat einen äußeren Spannhülsenteil (16, 17) und einen darin jeweils drehbar gelagerten, inneren Spannringteil (18, 19), wobei die äußeren Spannhülsenteile (16, 17) drehfest mit dem Sägengehäuse (4) in Verbindung stehen, während die Spannringteile (18, 19) jeweils nach außen aus den Spannhülsenteilen (16, 17) ragende Abschnitte aufweisen, auf deren freie Enden Endringe (20, 21) aufgeschraubt sind. In den Spannringteilen (18, 19), und zwar in den jeweils der Kreissäge (5) benachbarten Bereichen, sind Spannbacken (22, 23) - jeweils über den Umfang verteilt - geführt, die nach innen bewegbar sind. Die genaue Gestaltung der Spannköpfe (13, 14) insbesondere hinsichtlich der Betätigung der Spannbacken (22, 23) ist der Figur (2) zu entnehmen.

Die Endringe (20, 21) der Spannköpfe (13, 14) und die außenliegenden Stirnseiten der Spannhülsenteile (16, 17) schließen jeweils eine Ringnut (24, 25) ein, in denen Antriebsriemen (26, 27) umlaufen. Diese Antriebsriemen (26, 27) sind jeweils über eine Antriebsrolle (28, 29) gespannt, die auf einer Antriebswelle (30) - mit ihr drehfest verbunden - sitzen. Die Antriebswelle (30) ist in einem Fortsatz (31) des Sägengehäuses (4) gelagert. Es ist nicht näher dargestellt, daß die Antriebsrolle (28) in der fertigen Gesamtvorrichtung einen Rollenfortsatz aufweist, der über einen Riementrieb in Drehverbindung mit einem Elektromotor steht, der die Antriebswelle (30) antreibt. Auf diese Weise werden die innenliegenden Spannringteile (18, 19) in Drehung versetzt.

Die Antriebswelle (30) durchsetzt eine im Abstand zur Trenneinheit (3) liegende Abstützeinrichtung ( 2), welche auf einem Verfahrschlitten (33) angeordnet ist. Der Verfahrschlitten (33) ist Teil eines Linearmoduls (34), wie es beispielsweise von der Firma Deutsche Starl GmbH angeboten wird. Das Linearmodul (34) erstreckt sich achsparallel zu der Antriebswelle (30), so daß der Verfahrschlitten (33) ebenfalls achsparallel zu dieser verschoben werden kann. Der Verfahrschlitten (33) wirkt innenseitig mit einer Kugelspindel zusammen, die sich in Längsrichtung des Linearmoduls (34) erstreckt. Diese Kugelspindel steht über ein ebenfalls innenseitig angeordnetes Kegelgetriebe mit einem Servomotor (35) in Verbindung, so daß die Abstützeinrichtung (32) mit Hilfe dieses Servomotors (35) achsparallel zur Antriebswelle (30) verschoben werden kann.

Die Abstützeinrichtung (32) weist einen Lagerbock (36) und eine Spanneinrichtung (37) auf. Der Lagerbock (36) ist von der Antriebswelle (30) durchdrungen. In ihm ist eine außenliegende Antriebsrolle (38) gelagert, die über eine Nut-Feder-Verbindung drehfest, aber axial verschieblich auf der Antriebswelle (30) sitzt. Über diese Antriebsrolle (38) ist der Antriebsriemen (39) gespannt, der ein Antriebsrad (40) umspannt, das in der Spanneinrichtung (37) gelagert ist. Deren innenseitiger Aufbau ist der Figur (3) zu entnehmen. Auf der dem Antriebsrad (40) abgewandten Seite ragt aus der Spanneinrichtung (37) eine Spannwelle (41) heraus, die in Drehverbindung mit dem Antriebsrad (40) steht.

In den Durchgangskanal (15) der Trenneinheit (3) ragt ein Rollenmaterialstamm mit einem Ende hinein. Das andere Ende steht mit der Spannwelle (41) in Verbindung. Die Kreissäge (5) schneidet gerade in den Rollenmaterialstamm (42) ein, so daß von dessen dortigen Ende ein Rollenmaterialabschnitt (43) abgetrennt wird. Die weitere Funktion der Vorrichtung (1) wird nach Erläuterung des Aufbaus der Spannköpfe (13, 14) und der Spanneinrichtung (37) beschrieben.

In Figur (2) ist der Spannkopf (13) in Seitenansicht (untere Hälfte mit Teilschnitt) und in einem Axialschnitt (obere Hälfte) dargestellt, wobei die Details in Figur (1) nicht so deutlich hervorgehen. Der Spannringteil (18) ist zweischalig aufgebaut, wobei sich eine Innenhülse (44) über die gesamte Länge des Spannkopfes (13) erstreckt, während eine Außenhülse (45) die Innenhülse (44) nur teilweise umgibt. Sie ist über den Endring (20) mit der Innenhülse (44) axial verspannt und damit lagefixiert.

Die Außenhülse (45) und damit der Spannringteil (18) sind über zwei Kugellager (46, 47) im Spannhülsenteil (16) gelagert. Zur Ringnut (24) hin ist der Lagerringraum, in dem sich die Kugellager (46, 47) befinden, durch eine Ringscheibe (48), die durch eine Schraube (49) gehalten wird, im wesentlichen abgeschlossen. Zur Innenseite hin ist an dem Spannhülsenteil (16) gleichfalls eine Ringscheibe (50), ebenfalls durch eine Schraube (51) befestigt, angebracht. Eine Gleitringdichtung (52) stellt eine Abdichtung zwischen dieser Ringscheibe (50) und der Innenhülse (44) her.

Über den Innenumfang der Innenhülse (44) verteilt sind Spannbacken, von denen hier nur die Spannbacke (22) zu sehen ist. Sie ist in einem Schlitz (53) in der Innenhülse (44) radial verschieblich gelagert. Durch eine hier nicht näher dargestellte Federanordnung wird sie radial nach außen gedrückt.

Die Spannbacken (22) werden von einem Ringraum (54) umgeben, in dem ein axial verschieblicher Ringkolben (55) angeordnet ist. Dieser Ringkolben (55) umschließt die Innenhülse (44) und ist in einen Außenring (56) und einen Innenring (57) aufgeteilt. Zwischen beiden sind zwei Kugellager (58, 59) angeordnet und so eingespannt, daß eine Axialbewegung des Außenrings (56) in beiden Richtungen auf den Innenring (57) übertragen wird, dieser sich also bei einer Axialbewegung des Außenrings (56) mitbewegt. Der Außenring (56) stützt sich gegen einen Stift (60) ab, der achsparallel in einer Bohrung (61) gelagert ist, wobei in dem freien Teil der Bohrung (61) eine auf Druck beanspruchte Schraubenfeder (62) plaziert ist. Es können mehrere solcher Stifte (60) über den Umfang des Außenrings (56) angeordnet sein. Auf diese Weise ist der Außenring (56) mit einer nach innen, also nach links gerichteten Federkraft beaufschlagt.

Der Innenring (57) hat für jede Spannbacke (22) eine Keilfläche (63), an der eine entsprechend geneigte Anlagefläche (64) an der Spannbacke (22) anliegt, und zwar unter der Wirkung der oben beschriebenen, radial nach außen gerichteten Federvorspannung. Aufgrund der Neigung von Keilfläche (63) und Anlagefläche (64) ergibt sich, daß die Spannbacke (22) um so weiter nach innen gedrückt ist, je weiter der Ringkolben (55) nach rechts verschoben ist. Da der Außenring (56) an dem Absatz des Spannhülsenteils (16) anliegt, in dem der Stift (60) eingelassen ist, befindet sich die Spannbacke (22) in der am weitesten nach innen ausgefahrenen Stellung.

Der Ringkolben (55) wird in der gezeigten Stellung mittels Druckluft gegen die Wirkung der Schraubenfeder (62) gehalten. Diese Druckluft wird über eine Anschlußbohrung (65) zugeführt, wobei die Zuführleitungen nicht eingezeichnet sind. Die Anschlußbohrungen (65) mündet in eine Ringnut (66), die in die Stirnseite des Spannhülsenteils (16) eingefräst ist und von der Ringscheibe (48) abgedeckt wird. Von der Ringnut (66) gehen mehrere Axialbohrungen aus, von denen hier nur die Axialbohrung (67) gezeigt ist. Über eine Radialbohrung (68) (sie ist nach außen hin abgedichtet) gelangt die Druckluft in einen ringförmigen Druckraum (69), der den Ringkolben (55) umgibt und der außenseitig von dem Spannhülsenteil (16), innenseitig von dem Ringkolben (55) sowie stirnseitig einerseits von einem Ringsteg (70) der Ringscheibe (50) und andererseits ebenfalls von dem Ringkolben (55) eingeschlossen wird. Bei Druckluftbeaufschlagung wird aufgrund dieser Gestaltung der Ringkolben (55) in Richtung auf den Stift (60) gedrückt, wobei die Druckkraft größer ist als die entgegengesetzte Kraft der Schraubenfeder (62). Bei Druckentlastung kommt die Schraubenfeder (62) zum Tragen, d.h. der Ringkolben (55) wird nach links verschoben, wodurch sich die Backen (22, 23) nach außen bewegen, bis sie in der Endstellung den vollen Querschnitt des Durchgangskanals (15) freigeben.

Die Anschlußbohrung (65) sitzt innerhalb eines ringförmigen Aufsatzes (71), der in der Figur (1) nicht dargestellt ist.

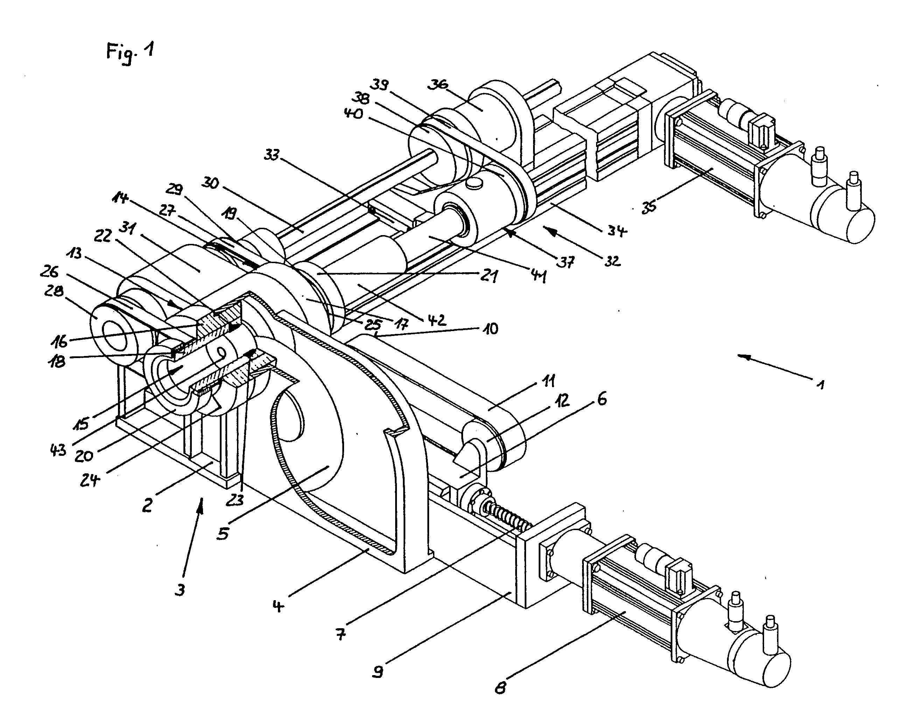

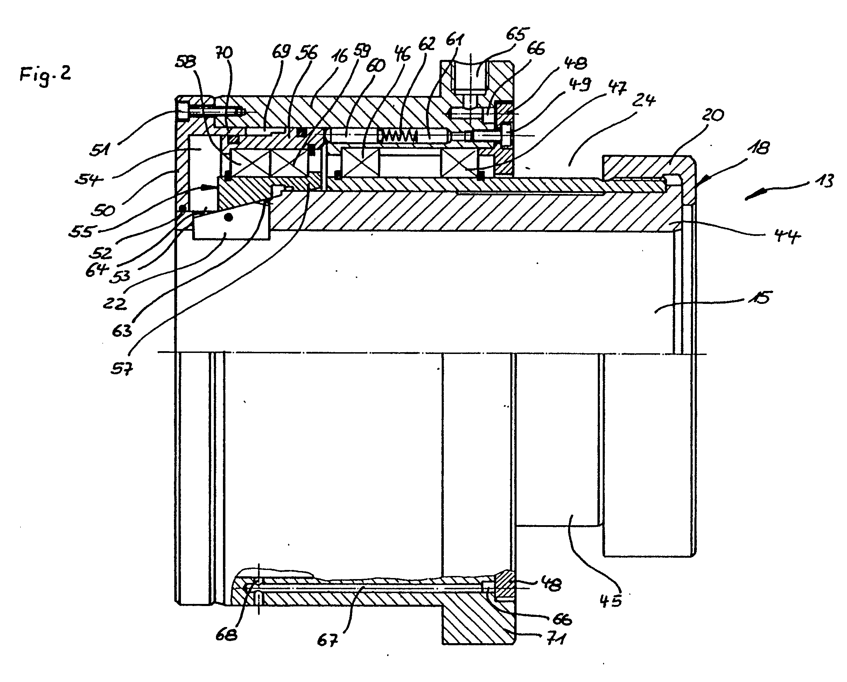

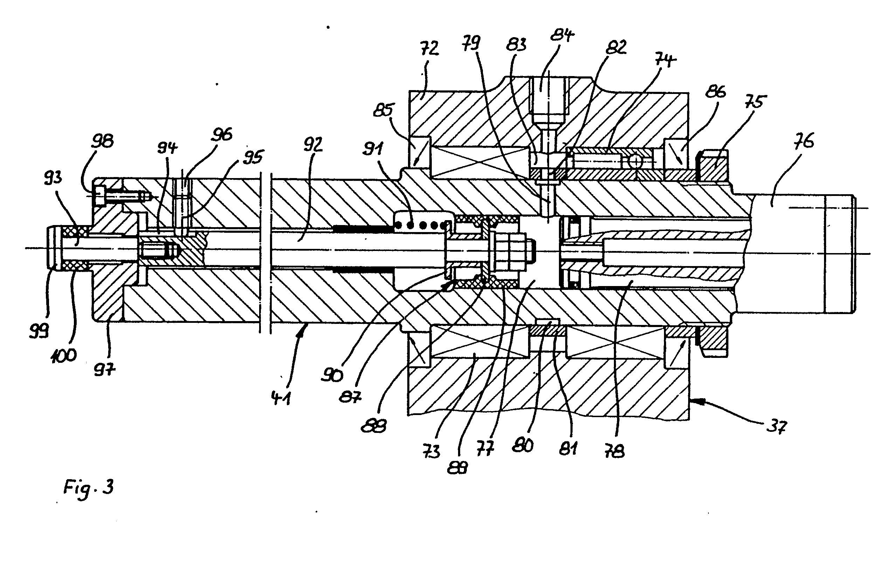

Die in Figur (3) im Axialschnitt dargestellte Spanneinrichtung (37) hat ein auf dem Verfahrschlitten (33) (Figur 1) sitzendes Gehäuse (72), durch das sich die Spannwelle (41) erstreckt. Sie ist in zwei kombinierte Nadel-Kugellager (73, 74) axial unverschieblich gelagert, wobei die Innenringe der Nadel-Kugellager (73, 74) durch eine Spannmutter (75) fixiert sind. Der in dieser Ansicht rechte Zapfen (76) der Spannwelle (41) trägt innerhalb der fertigen Vorrichtung (1), wie sie in Figur (1) dargestellt ist, das Antriebsrad (40), um den der Antriebsriemen (39) gespannt ist. Daher wird die Spannwelle (41) mit der gleichen Drehzahl angetrieben wie die Spannringteile (18, 19) der Spannköpfe (13, 14).

Die Spannwelle (41) weist einen sich axial erstreckenden Hohlraum (77) auf, in dem von rechts ein abdichtender Bolzen (78) eingeschraubt ist. Er ragt bis zu einer Radialbohrung (79), die an der Außenseite der Spannwelle (41) in eine Ringnut (80) mündet. Sie wird von einer Ringhülse (81) abgedeckt, die zwischen den beiden Nadel-Kugellagern (73, 74) verspannt ist und ebenfalls eine Radialbohrung (82) aufweist. Sie stellt eine Verbindung zu einem Ringraum (83) her, in den von außen eine Radialbohrung (84) mündet. In diese Radialbohrung (84) kann ein Zuführschlauch zur pneumatischen Druckbeaufschlagung des Hohlraums (77) eingeschraubt werden. Dichtringe (85, 86) an den Stirnseiten des Gehäuses (72) sorgen für eine Abdichtung des Ringraums (83) gegen Druckmittelverlust nach außen.

Auf der anderen Seite der Radialbohrung (79) ist ein Kolben (87) axial verschieblich gelagert, wobei der Kolben (87) aus einer Kolbenplatte (88) und einer diese umgebenden Gummimanschette (89) besteht. Auf der der Radialbohrung (79) abgewandten Seite des Kolbens (87) ist eine hutförmige Hülse (90) verspannt, die sich über eine gegen Druck belastete Schraubenfeder (91) abstützt. Aufgrund der Federwirkung ist der Kolben (87) bestrebt, sich in Richtung auf den Bolzen (78) zu bewegen.

Der Kolben (87) ist Teil einer Spannstange (92), die sich in Richtung auf einen Spannzapfen (93) erstreckt, der in das stirnseitige Ende der Spannstange (92) eingeschraubt ist. In diesem Bereich weist die Spannstange (92) eine Axialnut (94) auf, in die der Fuß einer Schraube (95) hineinragt, die in ein sich radial erstreckendes Schraubenloch (96) eingeschraubt ist. Auf diese Weise wird eine drehfeste Verbindung zwischen Spannstange (92) und Spannwelle (41) hergestellt.

Auf das vordere Ende der Spannwelle (41) ist eine Abdeckscheibe (97) mittels Schrauben (98) aufgeschraubt. Sie wird von dem Spannzapfen (93) durchsetzt. Der Spannzapfen (93) weist an seinem freien Ende einen verbreiterten Spannkopf (99) auf. In dem Raum zwischen Spannkopf (99) und der Außenseite der Abdeckscheibe (97) wird der Spannzapfen (93) von einem Gummiring (100) umgeben.

Sofern der Hohlraum (77) nicht druckbeaufschlagt ist, sorgt die Schraubenfeder (91) dafür, daß die Spannstange (92) und damit der Spannzapfen (93) in Richtung auf den Bolzen (78), also nach rechts geschoben wird. Hierdurch wird der Gummiring (100) zwischen dem Spannkopf (99) und der Abdeckscheibe (97) komprimiert, wodurch er seine radiale Ausdehnung vergrößert. Mittels Druckbeaufschlagung des Hohlraums (77) kann diese Komprimierung aufgehoben werden, weil damit die Spannstange (92) und der Spannzapfen (93) nach außen herausgeschoben werden und der Gummiring (100) nicht mehr axial beaufschlagt wird. Sein Durchmesser ist dann geringer, so daß über ihn passende Kernhülsen eines Rollenmaterialstamms (42) geschoben werden können.

Mit der vorbeschriebenen Vorrichtung (1) geschieht das Abtrennen von Rollenmaterialabschnitten (43) von einem Rollenmaterialstamm (42) wie folgt. Über eine Separiereinrichtung wird der Rollenmaterialstamm (42) der Vorrichtung (1) zugeführt. Hierzu wird er bei Stillstand der Vorrichtung (1) mit dem einen Ende in den Durchgangskanal (15) hineingeschoben, bis sein stirnseitiges Ende derart vor der Kreissäge (5) liegt, daß über diese hinaus nur noch ein kleines Stück ragt. In das andere Ende des Rollenmaterialstammes (42) wird der Spannzapfen (93) mit dem Gummiring (100) eingefahren, bis die Stirnseite des Rollenmaterialstammes (42) dort an der Abdeckscheibe (97) der Spannwelle (41) anliegt. Die gesamte Abstützeinrichtung (32) wird hierzu entsprechend durch Ansteuerung des Servomotors (35) und damit durch Verschieben des Verfahrschlittens (33) verfahren. Der Rollenmaterialstamm (42) wird dann eingespannt und zentriert, und zwar innerhalb der Trenneinheit (3) durch pneumatische Betätigung der Spannbacken (22, 23) innerhalb beider Spannköpfe (13, 14). Eine weitere Verspannung erfolgt an der Spannwelle (41), indem die Druckbeaufschlagung im Hohlraum (77), die für das Einführen des Spannzapfens (93) und des Gummirings (100) aktiviert worden ist, wieder aufgehoben wird. Dies hat zur Folge, daß die Schraubenfeder (91) die Spannstange (92) derart verschiebt, daß der Spannzapfen (93) den Gummiring (100) komprimiert, so daß sich dessen Außenseite an der Innenseite der Kernhülse des Rollenmaterialstammes (42) unter Vorspannung anlegt. Auf diese Weise ist eine drehfeste Verbindung zwischen Rollenmaterialstamm (42) und Spannwelle (41) hergestellt.

Es wird nun der Antrieb der Vorrichtung (1) in Gang gesetzt. Hiedurch werden die Antriebswelle (30) und damit die auf ihr sitzenden Antriebsrollen (28, 29, 38) in Drehung gesetzt, und zwar im Uhrzeigersinn. Über die Antriebsriemen (26, 27, 39) wird die Drehbewegung auf die Spannringteile (18, 19) der Spannköpfe (13, 14) und auf die Spannwelle (41) übertragen. Das Drehmoment wird dann umfangsseitig über die Spannbacken (22, 23) beider Spannköpfe (13, 14) einerseits und über den Gummiring (100) auf den Rollenmaterialstamm (42) gegeben, so daß sich auch dieser im Uhrzeigersinn (Ansicht gemäß Figur 1) dreht. Die zunächst aus dem Durchgangskanal (15) herausgezogene Kreissäge (5) wird nun in Drehung versetzt, und zwar in der Ansicht gemäß Figur (1) gegen den Uhrzeigersinn, da dann der Rollenmaterialstamm (42) und die Kreissäge (5) zueinander laufen und hierdurch die beste Schnittstaubabfuhr bewirkt wird. Durch Ansteuerung des Servomotors (8) wird die Kreissäge (5) zunächst langsam in den Rollenmaterialstamm (42) eingefahren. Bei weiterem Einfahren verkleinert sich das Schnittvolumen, so daß die Eintauchgeschwindigkeit durch entsprechende Ansteuerung des Servomotors (8) erhöht werden kann. Hierdurch erreicht man besonders kurze Schnittzeiten. Sobald der Umfang der Kreissäge (5) die Mitte des Rollenmaterialstammes (42) erreicht hat, ist der Rollenmaterialabschnitt (43) vollständig abgetrennt und wird die Kreissäge (5) im Schnellauf durch entsprechende Ansteuerung des Servomotors (8) zurückgezogen.

Dieser erste Trennvorgang dient allein zur Herstellung eines sauberen Randbeschnitts. Die Position des Rollenmaterialstammes wird dann auch als Ausgangsgröße für die Programmierung der Schnittbreite der nachfolgend abzuschneidenden Rollenmaterialabschnitte (43) genommen. Hierzu ist eine entsprechende Datenverarbeitungsanlage vorgesehen, die der Steuerung des am Linearmodul (34) angeflanschten Servomotors (35) dient. Durch Eingabe der vorgesehenen Breiten der Rollenmaterialabschnitte (43) wird der Verfahrschlitten (33) jeweils so bewegt, daß der Rollenmaterialstamm (42) nur um die vorgesehene Breite des nachfolgend abzuschneidenden Rollenmaterialabschnittes (43) in den Durchgangskanal (15) eingeschoben wird. Hierzu besitzt der Servomotor (35) einen Inkrementalgeber, der das jeweilige Maß der Verschiebung des Verfahrschlittens (33) an die Datenverarbeitungsanlage erfaßt und weitergibt. Hierdurch läßt sich eine außerordentlich exakte Positionierung des Rollenmaterialstammes (42) in Bezug auf die Kreissäge (5) erreichen.

Sind die Daten eingegeben, wird die Verspannung des Rollenmaterialstammes (42) in den Spannköpfen (13, 14) durch Druckentspannung der Druckräume (69) gelöst, wobei die Spannbacken (22, 23) radial nach außen fahren. Der Verfahrschlitten (33) wird dann durch entsprechende Ansteuerung des Servomotors (35) in Richtung auf die Trenneinheit (3) um den vorher eingegebenen Betrag verfahren. Nach Anhalten des Verfahrschlittens (33) und Festsetzen mittels einer in dem Linearmodul (34) angeordneten Bremse werden die Spannbacken (22, 23) in beiden Spannköpfen (13, 14) wieder nach innen heraus und an die Außenseite des Rollenmaterialstammes (42) angelegt. Dann kann die Kreissäge (5) wieder in den Rollenmaterialstamm (42) in der vorbeschriebenen Weise eingefahren werden. Dies alles wiederholt sich, bis der Rollenmaterialstamm (42) in einzelne Rollenmaterialabschnitte (43) aufgeteilt ist. Die Abstützeinrichtung (32) wird dann wieder zurückgefahren, damit ein neuer Rollmaterialstamm (42) aufgenommen und aufgeteilt werden kann.

## Ansprüche

1. Verfahren zum Abtrennen von Rollenmaterialabschnitten von einem Rollenmaterial, insbesondere aus auf einer Kernhülse aufgewickeltem Papier, bei dem das Rollenmaterial durch umfangseitigen Antrieb von einem Ende her in Drehung versetzt wird und nacheinander die Rollenmaterialabschnitte an Trennstellen durch radiales Einfahren eines Trennwerkzeuges abgetrennt werden, dadurch gekennzeichnet, daß das Rollenmaterial (42) für jeden Trennvorgang beidseits der vorgesehenen Trennstelle am Umfang eingespannt und über die Einspannungen (13, 14) zumindest während des Trennvorgangs angetrieben wird und daß die Einspannungen (13, 14) zwischen zwei Trennvorgängen gelöst werden, bis das Trennwerkzeug (5) gegenüber der nächsten Trennstelle steht.

2. Verfahren nach Anspruch 1, dadurch gekennzeichnet, daß das Einspannen und Trennen jeweils am selben Ort erfolgt und das Rollenmaterial (42) zwischen zwei Trennvorgängen relativ dazu verschoben wird.

3. Verfahren nach Anspruch 1 oder 2, dadurch gekennzeichnet, daß das Rollenmaterial (42) an dem den Einspannungen (13, 14) entfernten Ende ebenfalls angetrieben wird.

4. Verfahren nach Anspruch 3, dadurch gekennzeichnet, daß das Rollenmaterial (43) von dem den Einspannungen (13, 14) entfernten Ende auch zwischen zwei Trennvorgängen angetrieben wird.

5. Verfahren nach einem der Ansprüche 1 bis 4, dadurch gekennzeichnet, daß die Rollenmaterialbahn (42) nur über die der jeweiligen Trennstelle benachbarten Einspannungen (13, 14) und an dem davon entfernten Ende abgestützt wird.

6. Vorrichtung zur Durchführung des Verfahrens nach einem der Ansprüche 1 bis 5, mit einer Spanneinrichtung (13, 14) zum umfangseitigen Einspannen des Rollenamterials (42), mit einer Abstützeinrichtung (32) zur zusätzlichen Abstützung des Rollenmaterials (42), mit einem Drehantrieb, der mit der Spanneinrichtung (13, 14) zwecks Übertragung der Drehbewegung auf das Rollenmaterial (42) in Drehverbindung steht, sowie mit einer ein Trennwerkzeug (5) aufweisenden Trenneinrichtung, gekennzeichnet durch folgende Merkmale:

(a) Spanneinrichtung (13, 14) und Trenneinrichtung bilden eine Trenneinheit (3);

(b) die Spanneinrichtung (13, 14) weist beidseits des Trennwerkzeuges (5) angeordnete Spannelemente (16, 17, 18, 19, 22, 23) zum umfangsseitigen Einspannen des Rollenmaterials (42) beidseits des Trennwerkzeuges (5) auf;

(c) die Spannelemente (16, 17, 1, 19, 22, 23) sind auf beiden Seiten des Trennwerkzeuges (5) mit dem Drehantrieb verbunden.

7. Vorrichtung nach Anspruch 6, dadurch gekennzeichnet, daß die Abstützeinrichtung (32) axial unbeweglich mit dem Rollenmaterial (42) verbindbar ist und daß die Trenneinheit (3) und/oder die Abstützeinrichtung (32) zur Veränderung des axialen Abstandes zwischen beiden verschiebbar gelagert ist bzw. sind.

8. Vorrichtung nach Anspruch 7, dadurch gekennzeichnet, daß die Trenneinheit (3) ortsfest angeordnet und die Abstützeinrichtung (32) axial verschieblich gelagert ist.

9. Vorrichtung nach einem der Ansprüche 6 bis 8, dadurch gekennzeichnet, daß die Abstützeinrichtung (32) eine weitere Spanneinrichtung (37) aufweist, welche mit dem Drehantrieb zwecks Antrieb des Rollenmaterials (42) in Drehverbindung steht.

10. Vorrichtung nach Anspruch 9, dadurch gekennzeichnet, daß sich zwischen Trenneinheit (3) und Abstützeinrichtung (32) eine Welle (30) erstreckt, auf der ein in der Abstützeinrichtung (32) gelagertes, auf der Welle drehfest, aber verschiebbar angeordnetes Antriebsrad (38) sitzt, welches in Drehverbindung mit der Spanneinrichtung (37) steht.

11. Vorrichtung nach Anspruch 10, dadurch gekennzeichnet, daß auf der Welle (30) gegenüber den Spannelementen (16, 17, 18, 19, 22, 23) Antriebsräder (28, 29) sitzen, die in Drehverbindung mit den Spannelementen (16, 17, 18, 19, 22, 23) stehen.

12. Vorrichtung einem der Ansprüche 9 bis 11, dadurch gekennzeichnet, daß die Drehverbindungen als Riemenantrieb (26, 27, 39) ausgebildet sind.

13. Vorrichtung nach einem der Ansprüche 9 bis 12, dadurch gekennzeichnet, daß die Spanneinrichtung (37) der Abstützeinrichtung (32) einen zentrischen Spannzapfen (91) mit einem axial komprimierbaren Spannring (100) aufweist.

14. Vorrichtung nach einem der Ansprüche 6 bis 13, dadurch gekennzeichnet, daß die Abstützeinrichtung (32) auf einem Schlitten (23) angeordnet ist, der über einen Schneckenradantrieb (34) Zahnriemenradantrieb verfahrbar ist.

15. Vorrichtung nach Anspruch 14, dadurch gekennzeichnet, daß der Schneckenradantrieb (34) einen Inkrementalgeber und einen Elektromotor (35) sowie eine programmierbare Steuerung zur Positionierung des Schlittens (33) aufweist.

16. Vorrichtung nach einem der Ansprüche 6 bis 15, dadurch gekennzeichnet, daß das Trennwerkzeug (5) mit einem Schneckenradgetriebe (6, 7) für die Radialbewegung sowie dieses mit einem elektromotorischen Antrieb (8) versehen ist, dessen Drehzahl in Abhängigkeit von der Eindringtiefe des Trennwerkzeuges (5) steuerbar ist.

17. Vorrichtung nach einem der Ansprüche 6 bis 16,
dadurch gekennzeichnet, daß die Spannelemente als drehbare Spannhülsen (18, 19) mit an ihren Innenseiten radial ausfahrbaren Spannbacken (22, 23) ausgebildet sind.

18. Vorrichtung nach Anspruch 17,
dadurch gekennzeichnet, daß die Spannbacken (22, 23) bei Freigabe selbsttätig zurückfahren.

Fig. 1

EP 0 394 520 A1

Fig. 2

EP 0 394 520 A1

Fig. 3

EP 0 394 520 A1

Europäisches Patentamt

# EUROPÄISCHER RECHERCHENBERICHT

Nummer der Anmeldung

EP 89 10 7581

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | GB-A-2 181 894 (PERINI) <br> * Seite 2, Zeilen 33-70; Figuren 1,2 * <br> --- | 1,2,5,6 | B 26 D 3/16 // <br> B 65 H 35/00 <br> B 23 D 47/04 |
| Y | US-A-4 205 566 (MOLNAR) <br> * Spalte 5, Zeilen 47-68; Spalte 6, Zeilen 1-45; Figuren 1,3 * | 1,2,5,6 | |
| A | * Spalte 5, Zeilen 46-55; Figur 1 * <br> --- | 12 | |
| A | DE-A-2 702 993 (W. HILLESHEIMER KG) <br> --- | 7,9,13 | |
| D,A | DE-A-2 222 548 (W. HILLESMEIER KG) <br> --- | | |
| D,A | DE-A-2 425 123 (W. HILLESHEIMER KG) <br> ----- | | |

| RECHERCHIERTE SACHGEBIETE (Int. Cl.5) |
|---|
| B 26 D <br> B 23 D <br> B 65 H |

Der vorliegende Recherchenbericht wurde für alle Patentansprüche erstellt

| Recherchenort | Abschlußdatum der Recherche | Prüfer |
|---|---|---|
| DEN HAAG | 04-01-1989 | BERGHMANS H.F. |